Europäisches Patentamt

European Patent Office

Office européen des brevets

(11) Numéro de publication: **0 082 768**
**A2**

(12) # DEMANDE DE BREVET EUROPEEN

(21) Numéro de dépôt: **82402295.8**

(22) Date de dépôt: **14.12.82**

(51) Int. Cl.³: **G 01 K 7/22**
**G 01 K 1/16**

(30) Priorité: **23.12.81 FR 8124161**

(43) Date de publication de la demande:
**29.06.83 Bulletin 83/26**

(84) Etats contractants désignés:
**DE GB IT NL SE**

(71) Demandeur **L.C.C.-C.I.C.E. - COMPAGNIE**
**EUROPEENNE DE COMPOSANTS ELECTRONIQUES**
**101, Boulevard Murat**
**F-75781 Paris Cedex 16(FR)**

(72) Inventeur: **Larue, Henri**
**THOMSON-CSF SCPI 173, bld Haussmann**
**F-75379 Paris Cedex 08(FR)**

(72) Inventeur: **Cantagrel, Michel**
**THOMSON-CSF SCPI 173, bld Haussmann**
**F-75379 Paris Cedex 08(FR)**

(72) Inventeur: **Hardy, Patrick**
**THOMSON-CSF SCPI 173, bld Haussmann**
**F-75379 Paris Cedex 08(FR)**

(74) Mandataire: **Jacquard, Philippe et al,**
**THOMSON-CSF SCPI 173, Bld Haussmann**
**F-75379 Paris Cedex 08(FR)**

(54) **Capteur de température et dispositif l'incorporant.**

(57) Le capteur de température selon l'invention comporte un élément thermo-sensible (7) disposé dans un boîtier (1) le raccordant électriquement, et comportant une première face en contact thermique avec une première paroi (2) thermiquement conductrice du boîtier (1).

Application aux appareils à usage domestique tels que machines à laver le linge, machines à laver la vaisselle, séche-linge.

EP 0 082 768 A2

./...

# CAPTEUR DE TEMPERATURE ET
# DISPOSITIF L'INCORPORANT

La présente invention concerne un capteur de température, utilisable notamment dans les appareils à usage domestique tels que les machines à laver le linge, les machines à laver la vaisselle ou les séche-linge. Dans ceux-ci, il est en effet nécessaire, pour assurer un déroulement correct du cycle de lavage ou de séchage, d'avoir accès à la température à l'intérieur de la cuve où se produit l'opération de lavage ou de séchage.

Ces appareils sont habituellement équipés de systèmes bilames qui permettent de détecter si la température à l'intérieur de la cuve est inférieure ou supérieure à une température de consigne pour laquelle le bilame bascule.

Ces bilames présentent l'inconvénient d'être peu performants et de manquer de souplesse d'utilisation. En effet, ils permettent seulement de déterminer si la température à l'intérieur de la cuve est inférieure ou supérieure à une température de consigne, mais ils ne permettent pas de déterminer cette température dans l'absolu. De plus, un bilame étant associé à une température de consigne donnée, si l'on désire modifier cette température de consigne, ou si l'on désire se référer à plusieurs températures de consigne, il est nécessaire de remplacer le bilame existant ou de lui adjoindre de nouveaux bilames.

La présente invention a pour but d'éviter ces inconvénients.

Le capteur de température selon l'invention permet en effet de mesurer la température à l'intérieur d'une enceinte et de servir en même temps de sonde pour permettre la régulation de la température du milieu intérieur à l'enceinte selon plusieurs valeurs de consigne qui peuvent être soit présélectionnées, soit variables au choix de l'utilisateur, et ceci avec un seul élément.

2

L'invention a pour objet un capteur de température, caractérisé en ce qu'il comporte un élément thermo-sensible, disposé dans un boîtier le raccordant électriquement, et comportant une première face en contact thermique avec une paroi thermiquement conductrice du boîtier. Un élément thermo-sensible permet de mesurer continûment la température et non de comparer une température à un seuil comme le ferait un bilame.

La première face de l'élément thermo-sensible ainsi que la deuxième face qui lui est opposée peuvent être revêtues d'une électrode. L'élément thermo-sensible peut être en forme de disque. L'élément thermo-sensible peut être une thermistance.

Le capteur peut comporter un premier moyen pour maintenir élastiquement l'élément thermo-sensible contre la première paroi.

Le capteur peut comporter une plaque électriquement et thermiquement conductrice interposée entre l'élément thermo-sensible et la première paroi et se prolongeant au-delà de l'élément thermo-sensible. La plaque peut être maintenue élastiquement contre la première paroi par un second moyen.

Au moins un des moyens peut être électriquement conducteur et être disposé en contact électrique avec l'élément thermo-sensible et un conducteur de sortie du boîtier. Le conducteur de sortie peut être recourbé de manière à définir une surface de contact.

Au moins un des moyens peut être constitué par un conducteur de sortie du boîtier pourvu d'un prolongement élastique en contact électrique avec l'élément thermo-sensible.

Au moins un desdits moyens peut être un ressort, notamment spirale, qui peut être disposé dans un logement solidaire de la première paroi. Le logement peut présenter une ouverture destinée au passage de ladite plaque.

Au moins une des électrodes de l'élément thermo-sensible peut être garnie par une graisse ou une colle conductrice de la chaleur et de l'électricité.

Au moins un conducteur de sortie peut être solidaire d'une deuxième paroi du boîtier opposée à la première paroi.

L'invention concerne également un dispositif comprenant un tel capteur dont le boîtier est monté de manière telle que la première paroi soit susceptible de se trouver baignée par le milieu dont la température est à détecter et que la deuxième paroi se trouve hors de ce milieu.

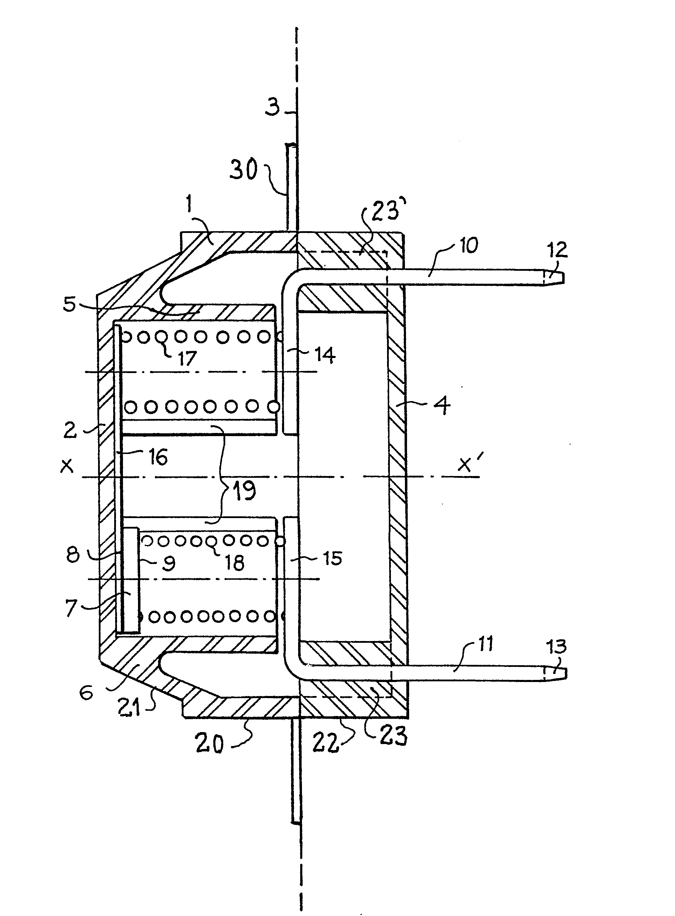

Les objets et caractéristiques de la présente invention apparaitront plus clairement à la lecture de la description suivante d'un exemple de réalisation, ladite description étant faite en relation avec la figure ci-annexée représentant une vue en coupe d'un dispositif de détection de température conforme à l'invention.

Les éléments formant le capteur de température conforme à l'invention sont logés dans un boitier 1.

Ce boitier présente une première paroi 2 qui est placée au contact du milieu intérieur à une enceinte 3 et qui est réalisée en matériau conducteur thermique, et une deuxième paroi 4 qui peut être placée au contact du milieu extérieur à l'enceinte 3. Les parois 2 et 4 du boitier se prolongent par deux faces latérales respectivement 20 et 21 qui peuvent être rendues solidaires l'une de l'autre notamment par soudure ultra-son. La paroi 2 et la face latérale 20 sont reliées par un cône 21 permettant la fixation du capteur sur un support approprié.

La paroi 2 du boîtier se prolonge vers l'intérieur de celui-ci par deux logements 5 et 6, notamment de forme cylindrique, situés de part et d'autre d'un axe de symétrie XX' du boitier.

Dans l'un de ces logements, repéré par 6, est placée un élément thermo-sensible 7, sous la forme d'une thermistance en forme de disque et muni d'une première électrode 8 placée au contact de la paroi 2 du boitier, et d'une deuxième électrode 9. L'élément tel que la thermistance 7 est de ce fait en contact thermique avec la paroi 2.

A l'intérieur du boitier 1 se trouve également un circuit de connexion électrique permettant de relier les électrodes de la thermistance 7 à des moyens de mesure du courant électrique (non représentés sur la figure) la parcourant et situés à droite de la paroi 4 du boîtier, dans le milieu extérieur à l'enceinte 3. La valeur de ce courant étant représentative de la température à laquelle est portée la thermistance, la mesure de ce courant permet de déterminer la température à l'intérieur de l'enceinte.

Ce circuit de connexion électrique comporte deux cosses conductrices 10 et 11 traversant la paroi 4 et disposées de part et d'autre de l'axe XX'. A l'extérieur du boitier, ces cosses sont munies de deux extrémités 12 et 13 aptes à être connectées aux moyens de mesure du courant parcourant la thermistance et elles peuvent être situées dans le milieu extérieur à l'enceinte. A l'intérieur du boitier ces cosses se terminent par une coubure destinée à amener les extré mités 14 et 15 des cosses situées à l'intérieur du boitier au contact du sommet des logements 5 et 6.

Le circuit de connexion électrique comporte également un conducteur électrique et thermique 16, réalisé notamment sous forme de plaque, interposé entre la paroi 2 et la première électrode 8 de la thermistance 7, et destiné à assurer la continuité électrique avec la première électrode 8 de la thermistance. Le passage de la plaque 16 est rendu possible par le fait que les logements 55 et 56 présentent une ouverture 19. Les deux ouvertures 19 ainsi constituées sont disposées en regard l'une de l'autre, symétriquement par rapport à l'axe XX'. Les interfaces entre la paroi 2 et la plaque 16, sont avantageusement garnies par des graisses ou des colles chargées d'élément bon conducteur de la chaleur. Les interfaces entre la plaque 16 et la première électrode 8 de la thermistance sont avantageusement garnies par des graisses ou des colles chargées d'élément bon conducteur de la chaleur et de l'électricité.

Le circuit de connexion électrique comporte enfin deux ressorts formant deux connexions électriques 17 et 18, et placés respec tivement dans les logements 5 et 6. Il sont maintenus par compression entre la plaque 16 et les extrémités 14 et 15 des cosses 10 et 11. Ils assurent la continuité électrique respectivement entre la deuxième électrode 9 de la thermistance 7 et l'extrémité 15 de la cosse 11, et entre la plaque conductrice 16 et l'extrémité 14 de la

5

cosse 10. D'autre part, les cosses 10 et 11 traversent la paroi 4 au niveau de deux rebords 23 et 23' laissant dépasser les extrémités courbées 14 et 15 des cosses 10 et 11.

Le capteur suivant l'invention présente divers avantages. il permet tout d'abord d'améliorer le maintien mécanique de l'élément thermo-sensible en assurant une bonne tenue aux vibrations, ce qui est très important pour l'application aux machines à usage domestique précitée. On notera que selon l'invention, un moyen tel qu'un ressort, maintenant élastiquement l'élément thermo-sensible contre la première paroi peut n'être utilisé que pour cette fonction, une connexion électrique étant réalisée par ailleurs.

L'élément thermo-sensible peut par ailleurs être maintenu contre la paroi par tout moyen (fixation mécanique, collage, etc...), le maintien élastique étant un mode de réalisation préféré. Il présente avantageusement, à cet effet, une collerette 30.

D'autre part, pour améliorer la précision de la mesure de la température, il est nécessaire non seulement d'optimiser les échanges thermiques entre le milieu intérieur à l'enceinte et la thermistance, mais aussi de minimiser les échanges thermiques entre la thermistance et le milieu extérieur à l'enceinte, ces derniers s'effectuant par l'intermédiaire du circuit de connexion électrique décrit précédemment.

Les échanges thermiques entre le milieu intérieur à l'enceinte et la thermistance peuvent être optimisés par un choix approprié des matériaux constituant le boitier 1 et le cas échéant de la plaque 16 et/ou par l'interposition de graisses ou de colles chargées d'élément bon conducteur thermique, entre la face interne de la paroi 2 et la plaque 16 et/ou par l'interposition de graisses ou de colles chargées d'élément bon conducteur thermique et électrique entre la plaque 16 et la thermistance 11.

Les échanges thermiques entre la thermistance et le milieu extérieur à l'enceinte peuvent être, eux, minimisés en utilisant des conducteurs électriques 17 et 18 de longueur importante pour relier la thermistance aux cosses, et tout particulièrement en leur donnant une forme spirale.

6

Le capteur selon l'invention est donc avantageux au plan technique, mais il se révèle aussi très avantageuse au plan économique.

En effet les ressorts 17 et 18 peuvent être maintenus par simple compression entre la plaque 16 et les extrémités 14 et 15 des cosses, éliminant ainsi toute nécessité de soudures qui se révèleraient néfastes au plan économique.

L'invention permet donc d'effectuer la mesure de la température à l'intérieur d'une enceinte, de manière parfaitement fiable, et au moyen d'une solution industrielle très simple facilitant la production en grande série.

7

# REVENDICATIONS

1. Capteur de température, caractérisé en ce qu'il comporte un élément thermo-sensible (9), disposé dans un boîtier (1) le raccordant électriquement, et comportant une première face en contact thermique avec une première paroi (2) thermiquement conductrice du boîtier (1).

2. Capteur selon la revendication 1, caractérisé en ce que la première face de l'élément thermo-sensible (9) ainsi que la deuxième face qui lui est opposée sont revêtues d'une électrode.

3. Capteur selon l'une des revendications 1 ou 2, caractérisé en ce que l'élément thermo-sensible est en forme de disque.

4. Capteur selon l'une des revendications 1 à 3, caractérisé en ce que l'élément thermo-sensible est une thermistance.

5. Capteur selon l'une des revendications précédentes, caractérisé en ce qu'il comporte un premier moyen (18) pour maintenir élastiquement l'élément thermo-sensible contre la première paroi.

6. Capteur selon l'une des revendications précédentes, caractérisé en ce qu'il comporte une plaque (8) électriquement et thermiquement conductrice interposée entre l'élément thermo-sensible (9) et la première paroi et se prolongeant au-delà de l'élément thermo-sensible (9).

7. Capteur selon la revendication 6, caractérisé en ce qu'il comporte un second moyen (17) pour maintenir élastiquement ladite plaque (8) contre la première paroi (2).

8. Capteur selon l'une des revendications 5 ou 7, caractérisé en ce que l'un au moins desdits moyens (17, 18) est électriquement conducteur et est disposé en contact électrique avec l'élément thermo-sensible et un conducteur de sortie (10, 11) du boîtier (1).

9. Capteur selon l'une des revendications 5, 7 ou 8, caractérisé en ce qu'au moins un conducteur de sortie (10, 11) est recourbé de telle sorte qu'il définit une surface de contact (14, 15) avec ledit moyen (17, 18).

10. Capteur selon l'une des revendications 5, 7 ou 8, caractérisé en ce que l'un au moins desdits moyens est constitué par un conducteur de sortie du boîtier, pourvu d'un prolongement élastique en contact électrique avec l'élément thermo-sensible.

11. Capteur selon l'une des revendications 5 ou 7 à 10, caractérisé en ce que l'un au moins desdits moyens (17, 18) est un ressort.

12. Capteur selon la revendication 11, caractérisé en ce que l'un au moins desdits ressorts est un ressort spirale.

13. Capteur selon l'une des revendications 11 ou 12, caractérisé en ce que l'un au moins desdits ressorts est disposé dans un logement (5, 6) solidaire de la première paroi (2).

14. Capteur selon la revendication 7 et la revendication 13 prises ensemble, caractérisé en ce qu'au moins un logement (5, 6) présente une ouverture (19) destinée au passage de ladite plaque (8).

15. Capteur selon l'une des revendications précédentes, caractérisé en ce qu'au moins une des électrodes de l'élément thermo-sensible (9) est garnie par une graisse ou une colle conductrice de la chaleur et de l'électricité.

16. Capteur selon l'une des revendications précédentes, caractérisé en ce qu'au moins un conducteur de sortie (10, 11) est solidaire d'une deuxième paroi (4) du boîtier opposée à la première paroi (2).

17. Dispositif, caractérisé en ce qu'il comporte un capteur selon la revendication 16, dont le boîtier (1) est monté de manière telle que la première paroi (2) soit susceptible de se trouver baignée par le milieu dont la température est à détecter et que la deuxième paroi (4) se trouve hors de ce milieu.